# EUROPEAN PATENT APPLICATION

(11) **EP 1 950 838 A1**
(43) Date of publication of application: **30.07.2008**
(21) Application number: 06811527.8
(22) Date of filing: 10.10.2006
(51) Int. Cl.: H01R 12/18, G06K 17/00

(54) **CONNECTOR FOR SMALL RECORDING MEDIUM**

(30) Priority: 15.11.2005 JP 2005330573
(71) Applicant: MATSUSHITA ELECTRIC WORKS, LTD., Kadoma-shi, Osaka 571-8686 (JP); MATSUSHITA ELECTRIC INDUSTRIAL CO., LTD., Osaka 571-8501 (JP)
(72) Inventor: TANAKA, Hirohisa, Kadoma-shi Osaka 5718686 (JP); NAKAMURA, Yutaka, Kadoma-shi, Osaka 5718501 (JP)
(74) Representative: Appelt, Christian W.
(86) International application number: PCT/JP2006/320215
(87) International publication number: WO 2007/058031

(57) **Abstract**

The invention provides a connector capable of applying a harmless emetic substance to a small recording medium such as a memory card to prevent an infant from accidentally swallowing the small recording medium. This connector includes a casing, contacts disposed within the casing in electrical connection with terminals of the small recording medium, and a holding member configured to hold the small recording medium within the casing. The holding member is provided with the emetic substance at a portion contacting with the small recording medium. Preferably, denatonium benzoate is used as the emetic substance.

## Description

### TECHNICAL FIELD

The present invention relates to a connector into which a removable small recording medium such as a memory card (e.g., an SD card) is inserted.

### BACKGROUND ART

In electric appliances such as a digital camera and a portable telephone, recently, use of a small recording medium such as a memory card (e.g., an SD card, a CF card) has become widespread. For example, JP-A 2004-207168 discloses a connector structure that makes a small recording medium usable in an electric appliance.

Herein, miniaturization of an electronic appliance and a removable recording medium to be inserted thereinto eliminates limitations concerning an area where the electronic appliance is usable together with the recording medium, and offers convenient and comfortable environments to a user in various situations. However, popularization of the small recording medium tends to increase the following accident. That is, the user sometimes leaves a small recording medium at an easy-to-reach place for an infant in daily life, so that the infant erroneously puts the small recording medium in his/her mouth.

In order to avoid such an accident, there has been proposed a technique of applying a substance having a bitter principle to a surface of a small recording medium. This technique brings about the following advantage. That is, even when an infant erroneously puts the small recording medium in his/her mouth, the bitter principle allows the infant to immediately vomit the small recording medium. However, this technique has the following problem. That is, each time a user handles the small recording medium, the bitter principle is worn (e.g., the bitter principle is wiped off in the small recording medium) along with a lapse of time of use, resulting in reduction of the advantage of preventing the infant from accidentally swallowing the small recording medium.

### DISCLOSURE OF THE INVENTION

In view of the above problem, the present invention has been achieved and has an object of providing a connector in which a harmless emetic substance is held at a concealed interior portion so as not to be readily wiped off. Thus, each time the connector receives a small recording medium, the emetic substance can be transferred to the small recording medium irrespective of whether it is originally designed to be free of the emetic substance or it is removed of the substance by being wiped off, thereby assuring a long-term effect of preventing an accidental hazard of swallowing the medium by an infant.

More specifically, the connector according to the present invention includes an insertion slot through which user can insert the small recording medium, a casing, contacts disposed within the casing for electrical connection with terminals of the small recording medium, and a holding member configured to hold the small recording medium within the casing. The holding member is configured to have its portion contacting with the small recording medium inside the casing, for storing the harmless emetic substance.

In this specification, the small recording medium may be a card type recording medium such as a memory card (e.g., an SD card, a CF card), an adaptor for removably receiving the recording medium, a small recording unit having another recording medium, and the like.

Moreover, the emetic substance in the present invention is a substance inducing anyone who accidentally puts the small recording medium in one's mouth (particularly infant) to vomit the small recording medium. The emetic substance may be selected from substances that stimulate a sense of taste of a person, such as a bitter taste, a salty taste, a pungent taste, a sour taste or an astringent taste. For example, the emetic substance may be denatonium benzoate which is known as a harmless, strong bitter principle, epicatechin contained in tea, humulone which is a bitter principle contained in beer, or the like.

In the present invention, preferably, the holding member is made of a dielectric material containing the emetic substance, eliminating an additional coating of the substance, thereby facilitating the assembly of the connector. In addition, even when the holding member has its surface worn or scratched, the emetic substance can be supplied from the interior of the holding member. Therefore, the small recording medium can be reliably coated with the emetic substance.

Also preferably, the holding member includes a slider configured to slide with being interlocked with the small recording medium while it is inserted into the casing through the insertion slot. The slider is provided with the emetic substance at its face in contact with the small recording medium. Also, the slider may be treated with a lubricant agent containing the emetic substance so that the emetic substance can be applied together with the lubricant to the small recording medium. Accordingly, no additional coating of the emetic substance is necessary, further facilitating the assembly of the connector.

Also preferably, the holding member is formed at its position contacting with the inserted small recording medium with at least one dent for storing the emetic substance. In this case, the emetic substance can be put reliably on the small recording medium even when additional supply of the emetic substance is stopped for a long time. Also preferably, the holding member is formed with a plurality of dents for storing the emetic substance and grooves for coupling respective neighboring dents at a portion of contacting with the small recording medium. In this case, a contact area between the small recording medium and the emetic substance can be enlarged. Therefore, a large quantity of the emetic substance can be put on the small recording medium.

Also preferably, the holding member includes a storage part of the emetic substance, a dent formed at its portion contacting with the small recording medium, and a channel for supplying the emetic substance from the storage to the dent. In this case, the emetic substance is replenished from the storage to the dent through the channel even when being exhausted. Therefore, the emetic substance can be supplied stably for a long period of time.

Another object of the present invention is to provide an electric appliance incorporating the connector described above.

These and still other features and advantages of the present invention will be clearly understood by the following detailed description of the present invention.

### BRIEF DESCRIPTION OF THE DRAWINGS

Fig. 1 is a perspective view showing a connector according to one preferred embodiment of the present invention and a memory card.
Fig. 2 is a perspective view showing the connector with the memory card being inserted thereinto.
Fig. 3 is an exploded perspective view showing the connector.
Figs. 4(A) and 4(B) are perspective views each showing a modification of a slider.
Figs. 5(A) and 5(B) schematically illustrate a mechanism for detecting a fact that the memory card is inserted into the connector.
Fig. 6 is a perspective view showing one example of an electric appliance incorporating the connector according to the present invention.

### BEST MODE FOR CARRYING OUT THE INVENTION

With reference to the accompanying drawings, hereinafter, a connector for a memory card such as an SD card or a CF card will be described in detail as a connector for a small recording medium according to one preferred embodiment of the present invention.

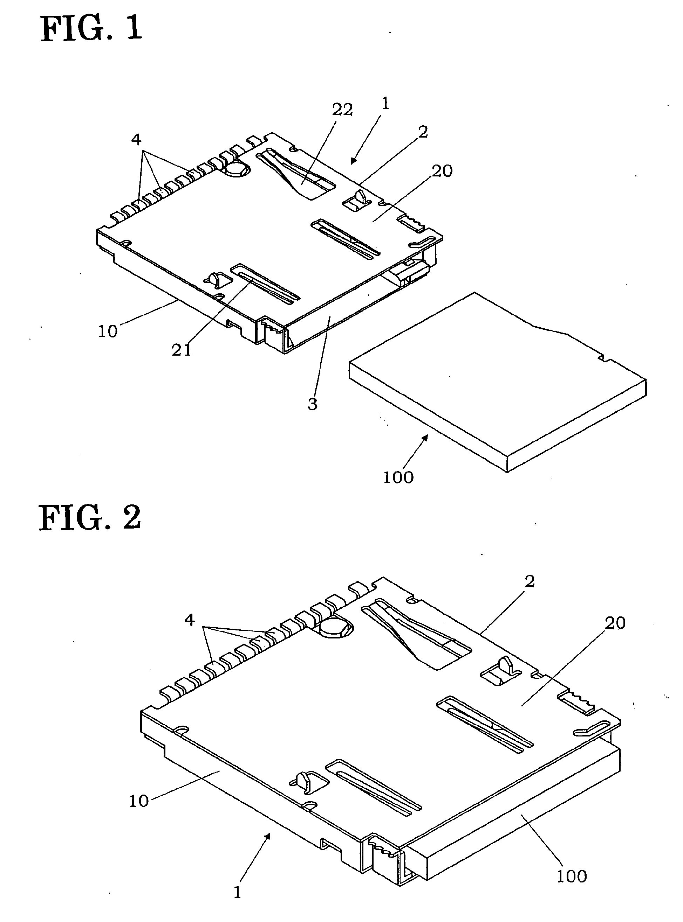

As shown in Figs. 1 to 3, the connector 1 according to this embodiment has an insertion slot 3 formed at one side thereof. The insertion slot 3 is formed into an elongate and rectangular shape to receive the memory card 100 through the insertion slot 3. The connector 1 includes a hollow casing 2, a plurality of contacts 4 and a holding member (5, 6). The casing 2 includes a base shell 10 and a cover shell 20 each made of a metal. The plurality of contacts 4 are disposed within the casing 2 for electrical connection with connection terminals (not shown) of the memory card 100 inserted into the connector 1. The holding member holds the memory card 100 within the casing 2.

The base shell 10 includes a bottom wall 11 and side walls 12. The bottom wall 11 is formed into a substantially square shape, and the side walls 12 protrude from opposed two sides of the bottom wall 11 in a direction substantially perpendicular to the bottom wall 11. As a whole, the base shell 10 is formed to have a flat and substantially "U" shaped section. On the other hand, the cover shell 20 is formed into a substantially square and planar shape analogous to the bottom wall 11 of the base shell 10. A spring piece 21 is used for pressing the memory card 100 against the bottom wall 11 of the base shell 10. The cover shell 20 is connected to tip ends of the side walls 12 of the base shell 10 by laser welding or the like.

In this embodiment, the holding member includes a contact block 5 and a slider 6. The contact block 5 holds the plurality of contacts 4, and the slider 6 is held within the casing 2 so as to be movable in a memory card in a direction of inserting or removing the memory card. As described later, an emetic substance is applied onto the holding member at a portion where the contact block 5 contacts with the memory card 100 and a portion where the slider 6 contacts with the memory card 100. Thus, each time the memory card 100 is inserted into the connector 1, the emetic substance can be applied to the memory card 100. Herein, a holding member formed into a substantially "C" shape, in which a slider and a contact block are formed integrally with each other, may be used in place of the holding member described above.

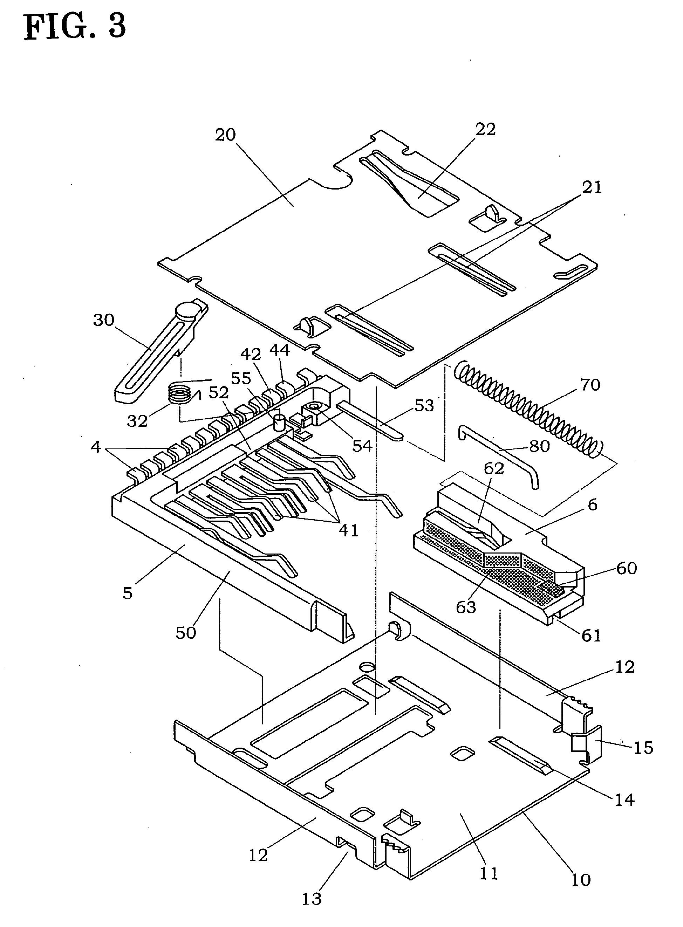

As shown in Fig. 3, the contact block 5 is made of a dielectric material, and is formed into a substantially "L" shape. The contact block 5 includes a card holding part 50 and a contact holding part 52. The card holding part 50 holds one side of the memory card 100 inserted into the connector 1, and the contact holding part 52 holds the plurality of contacts 4 such that each contact 4 protrudes within the casing 2. Each contact 4 is made of a conductive metal, and is formed into an elongate plate shape. That is, each contact 4 includes a curved tip end 41. In each contact 4, a base end is held by the contact the holding part 52 and the curved tip end 41 protrudes within the casing 2. Thus, when the memory card 100 is placed at a predetermined position in the connector 1, the tip ends 41 of the contacts 4 are in electrical connection with the corresponding terminals of the memory card 100. The contact block 5 is secured to the base shell 10 by a hook 13 formed at the base shell 10.

The slider 6 is made of a dielectric resin, and is formed into a substantially rectangular shape. A coil spring 70 is disposed between one end of the slider 6 and a tip end of the contact holding part 52 to bias curve apply a spring bias to the slider 6 in a direction opposite to the memory card insertion direction. In other words, when the memory card 100 is pushed into the casing 2 through the insertion slot 3, the slider 6 can move in the memory card insertion direction against the spring bias of the coil spring 70.

With reference to Fig. 3, a rod-shaped projection 53 protrudes from the tip end of the contact holding part 52 so as to penetrate through the coil spring 70. The projection 53 prevents buckling of the coil spring 70 caused due to the movement of the slider 6. Herein, the slider 6 is guided in such a manner that a recess 61 formed on a bottom side of the slider 6 is fitted to a guide rail 14 projecting on a top side of the bottom wall 11 of the base shell 10. Thus, the slider 6 can move stably in a direction along the side wall 12 of the base shell 10.

In addition, a guide groove 62 is formed on a top side of the slider 6 in a longitudinal direction. An one end of a guide pin 80 is inserted into the guide groove 62 and the other end is rotatably inserted into a hole 54 at the tip end of the contact holding part 52. With this arrangement, a movable range of the slider 6 can be specified within the casing 2. With reference to Fig. 3, a stopper 15 protrudes upward from the bottom wall 11 of the base shell 10 in the vicinity of the insertion slot 3 to prevent the slider 6 from dropping off the insertion slot 3. In addition, a spring piece 22 is provided at the cover shell 20 so as to prevent the guide pin 80 from slipping off the guide groove 62.

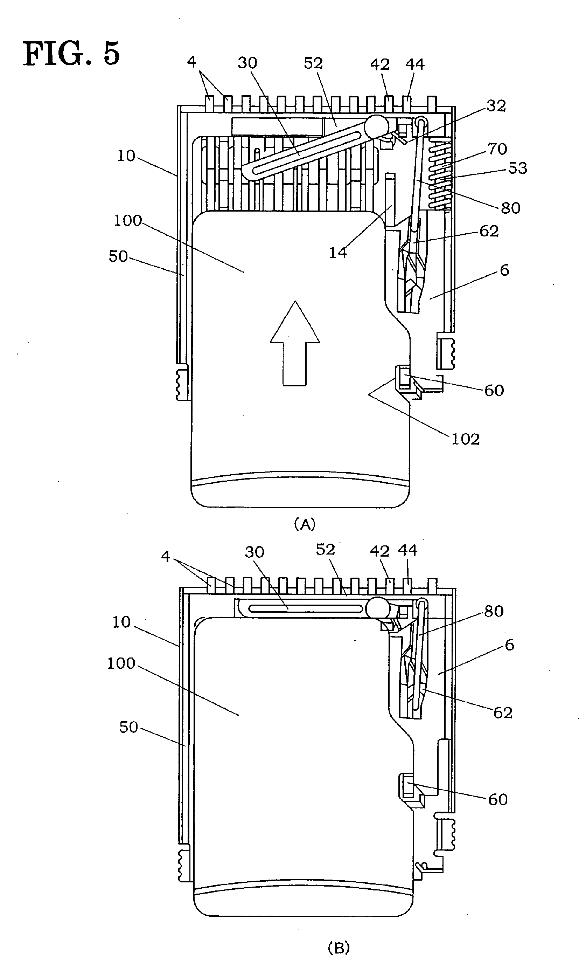

With reference to Fig. 3, the slider 6 includes a step portion 63 and a projection 60. The step portion 63 is formed to be fitted to lateral side of the memory card 100 inserted into the connector 1, and the projection 60 is engaged with a recess 102 (see Fig. 5(A)) of the memory card 100 inserted into the connector 1. As described above, the memory card 100 inserted into the connector 1 is pressed against the step portion 63 of the slider 6 while being engaged with the projection 60. Therefore, the memory card 100 can slide within the connector 1 while being held by the slider 6.

As shown by a hatched area in Fig. 3, in this embodiment, the emetic substance is applied onto the slider 6 at its portion in contact with the memory card 100, namely the step portion 63, the projection 60, as well as the periphery thereof. The emetic substance is also applied onto the memory card holding part 50 at an inner surface contacting with the memory card 100. Thus, the emetic substance can be reliably applied to the memory card 100 inserted into the connector 1.

The holding member can be given the emetic substance by being coated at its predetermined portion with the substance or by being immersed into a liquid containing the emetic substance and stored in a vessel. When using such technique, the holding member may be pretreated to have fine surface irregularity. Having fine surface irregularity, the holding member can hold the emetic substance in larger quantity by the above application or immersion. For the purpose of roughening the surface, mechanical roughing such as shot blasting or chemical roughening by etching can be adopted.

Alternatively, the emetic substance may be mixed into a lubricant to be used for achieving smooth movement of the slider 6 within the connector 1. Since the slider is generally required to be coated with the lubricant even if it is not intended to prevent the accidental swallowing, the use of the lubricant containing the emetic substance enables the simultaneous coating of the lubricant and the emetic substance.

Preferably, the emetic substance may be mixed in advance into a dielectric resin material for the slider 6 or the contact block 5 prior to formation of the slider 6 or the contact block 5. In this case, the application or immersion of the emetic substance can be is unnecessary, facilitating assembly of the connector 1. Even when each of the slider 6 and the contact block 5 is worn at the portion contacting with the memory card 100 due to repetitive use of the connector 1, the advantage of preventing the accidental swallowing can be maintained for a long time because the emetic substance is stored in the slider 6 and the contact block 5.

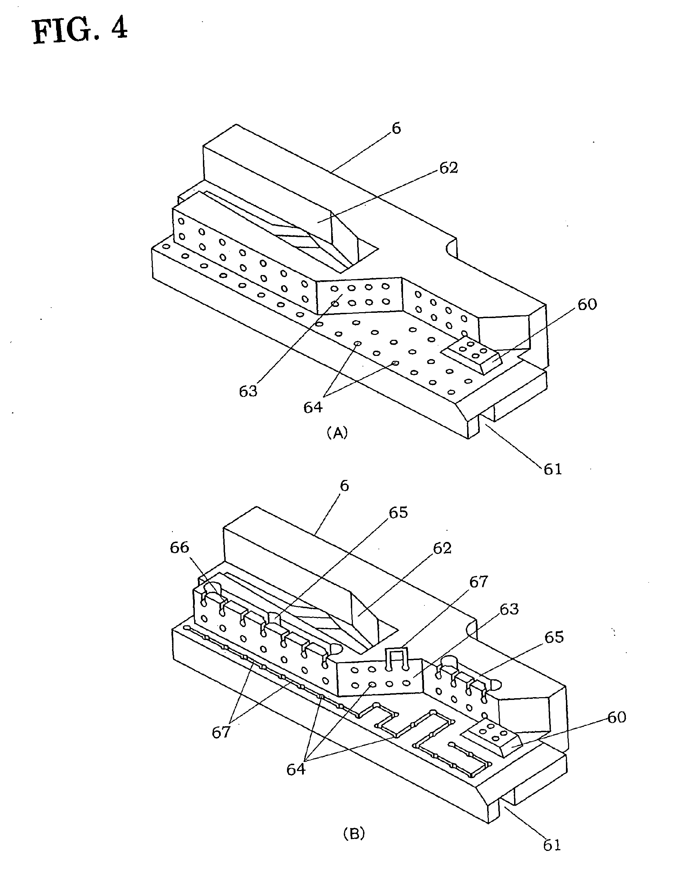

As shown in Fig. 4(A), further, the slider 6 may have a plurality of dents 64 formed at the portion contacting with the memory card 100 in order to retain the emetic substance. In this case, since each dent 64 retains the emetic substance, the emetic substance can be held for a long period of time, keeping the effect to prevent the accidental swallowing for a long time. In addition, as shown in Fig. 4(B), it is also preferred that a storage 65 for storing the emetic substance is formed on the slider 6 at a portion not to contact with memory card 100, and is coupled through a channel 66 to the dent 64 formed on the slider 6 at the portion contacting with the memory card 100. In this case, even when the emetic substance retained in the dent 64 decreases, the emetic substance stored in the storage 65 can be supplied to the dent 64 through the channel 66. As shown in Fig. 4(B), further, a groove 67 may be configured to couple the adjoining dents 64. In this case, a contact area between the memory card 100 and the emetic substance can be further enlarged. Thus, the emetic substance can be applied to the memory card 100 effectively. In a case where the emetic substance is in a liquid phase, the dent 64 and the channel 66 are dimensioned to prevent a leak of the emetic substance in consideration of surface tension of the emetic substance. The emetic substance is prepared to have adequate viscosity.

The emetic substance to be used herein offers an advantage of allowing a person (particularly, an infant) who has put the memory card 100 in his/her mouth to physiologically vomit the memory card 100 by stimulation (e.g., a bitter taste) to his/her sense of taste. Further, the emetic substance is required to be sufficiently safe for a human body. For example, a bitter principle, contained in a herbal medicine, may be used. In this embodiment, denatonium benzoate is used as a substance having a bitter principle. Use of denatonium benzoate within a range of 6 to 100 ppm can achieve satisfactory emetic action. In consideration of the emetic substance being applied to the memory card 100, its concentration is preferably within a range of 0.01 to 1.00 wt%.

The emetic substance usable in the present invention is not limited to the foregoing substance having the bitter principle, and may be one that stimulates a sense of human taste, for example, a substance having a pungent principle, a substance having a sour principle or a substance having an astringent principle, all of which induce an infant who has erroneously put the memory card 100 in his/her mouth to immediately vomit the memory card 100. In order to induce the infant to vomit the memory card 100, alternatively, a substance that stimulates a sense of smell of the infant may be used in place of the substance that stimulates the sense of taste. In this case, the substance stimulates the sense of smell of the infant who attempts to put the memory card 100 in his/her mouth, so that the infant quits putting the memory card 100 in his/her mouth. Thus, the substance may prevent the infant from accidentally swallowing the memory card 100.

The connector 1 according to this embodiment includes a check mechanism that detects whether the memory card 100 is placed at the predetermined position in the connector 1. The check mechanism includes a movable arm 30, a torsion spring 32 and a pair of fixed contacts 42 and 44.
The movable arm 30 has its one end rotatably supported by a columnar projection 55 provided at the contact holding part 52 of the contact block 5. The torsion spring 32 is fitted to the columnar projection 55. The pair of fixed contacts 42 and 44 is held by the contact holding part 52. As shown in Fig. 5(A), the movable arm 30 is spring-biased by the torsion spring 32 to move away from the contact holding part 52. Herein, electrical connection between the fixed contacts 42 and 44 is established by the torsion spring 32. As shown in Fig. 5(B), on the other hand, when the memory card 100 is inserted into the connector 1, the tip end of the memory card 100 turns the movable arm 30 against the spring bias of the torsion spring 32 in the direction which the movable arm 30 approaches the contact holding part 52. In this case, when one end of the torsion spring 32 contacting with the fixed contact 44 is pushed by the movable arm 30 away from the fixed contact 44, the fixed contact 42 is electrically disconnected from the fixed contact 44. The connector 1 can detect the electrical disconnection, it is determined that the memory card 100 is placed at the predetermined position in the connector 1.

The connector 1 according to this embodiment also includes a lock/release unit for the memory card 100. The lock/release unit facilitates insertion/removal of the memory card 100 into/from the connector 1. More specifically, an appropriate step is formed on a bottom side of the guide groove 62 of the slider 6. When the memory card 100 is inserted into the connector 1, one end of the guide pin 80 inserted into the guide groove 62 moves within the guide groove 62 only in a specified direction without reverse movement. Moreover, a so-called heart cam mechanism is provided at an end of the guide groove 62. When the memory card 100 is inserted into the connector 1 to the predetermined position, the heart cam mechanism locks the memory card 100. When the memory card 100 is further pushed in the insertion direction, the heart cam mechanism releases the lock state. When the lock state is released, the memory card 100 moves together with the slider 6 toward the insertion slot 3 by means of the spring bias of the coil spring 70. Then, the rear end of the memory card 100 protrudes from the insertion slot 3. Thus, a so-called push-on/push-off function is realized.

Hereinafter, brief description will be given as to operation in a case where the memory card is inserted into the connector 1 having the structure described above. When the user inserts the memory card 100 into the connector 1 through the insertion slot 3, the side face of the memory card 100 contacts with the step portion 63 of the slider 6. Further, the projection 60 of the slider 6 is fitted to the recess 102 of the memory card 100. Herein, when the user further pushes the memory card 100 into the connector 1, the slider 6 moves together with the memory card 100 against the spring bias applied by the coil spring 70. Herein, the emetic substance applied to each of the slider 6 and the card holding part 50 of the contact block 5 is put on the memory card 100. As described above, when the memory card 100 reaches the predetermined position, the movable arm 30 is turned to electrically disconnect between the fixed contacts 42 and 44. Thus, an electrical connection of the memory card 100 to the connector 1 is detected. Then, the lock/release unit brings about the lock state so as to prevent the memory card 100 from slipping off the insertion slot 3.

In order to remove the memory card 100 from the connector 1, next, the user further pushes the memory card 100 into the connector 1 to release the lock state. As a result, the memory card 100 moves together with the slider 6 toward the insertion slot 3 by means of the spring bias of the coil spring 70, enabling the users to hold the rear end of the memory card 100 protruding from the insertion slot 3 of the connector 1 to remove the memory card 100 from the connector 1 with ease. The emetic substance is applied to the memory card 100 removed from the connector 1 as described above because the memory card 100 contacts with the slider 6 and the card holding part 50 of the contact block 5. As a result, infants who has accidentally put the memory card 100 in his/her mouth vomits the memory card 100 immediately.

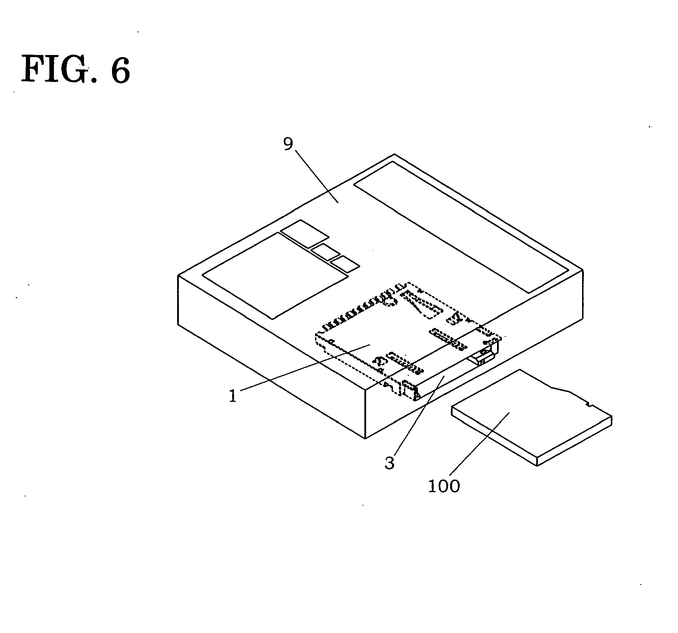

Finally, Fig. 6 shows one example of an electric appliance 9 incorporating the connector 1 according to this embodiment. Herein, the electric appliance 9 incorporating the connector 1 is not particularly limited, and may be an electric appliance that requires access of a small recording medium, such as a digital camera, a portable telephone or a portable audio equipment.

As described above, the connector according to the present invention brings about the following advantage. That is, each time the small recording medium such as a memory card is inserted into the connector, the harmless emetic substance is applied to the small recording medium. Therefore, the emetic substance applied to the small recording medium allows an infant who has accidentally put the small recording medium in his/her mouth to vomit the small recording medium immediately. Accordingly, the small recording medium can be used with safety even in such an environment that there is an infant around.

In future, electric appliances capable of utilizing small recording media become further widespread. Therefore, it can be expected that the connector according to the present invention, capable of prevent the infant from accidentally swallowing the small recording medium, becomes available widely.

## Claims

1. A connector for a small recording medium with an insertion slot through which said small recording medium is inserted, said connector comprising:
a casing;
contacts disposed within said casing in electrical connection with terminals of said small recording medium; and
a holding member configured to hold said small recording medium within said casing,
wherein said holding member is provided with a harmless emetic substance at a portion contacting with said small recording medium inserted into said casing.

2. A connector as set forth in claim 1, wherein said small recording medium is a memory card.

3. A connector as set forth in claim 1, wherein said holding member is made of a dielectric material containing therein said emetic substance.

4. A connector as set forth in claim 1, wherein said holding member includes a slider configured to make a slide movement as being interlocked with said small recording medium inserted into said casing through said insertion slot, said slider being provided with said emetic substance at its face contacting with said small recording medium.

5. A connector as set forth in claim 4, wherein said slider is formed with a lubricant containing said emetic substance.

6. A connector as set forth in claim 1, wherein said holding member is formed with at least one dent at a portion contacting with said small recording medium for storing said emetic substance.

7. A connector as set forth in claim 6, wherein said at least one dent includes a plurality of dents, said holding member formed with grooves coupling the adjacent dents.

8. A connector as set forth in claim 1, wherein said holding member comprises a storage of said emetic substance, a dent formed at a portion contacting with said small recording substance, and a channel for supplying said emetic substance from said storage to said dent.

9. An electric appliance incorporating said connector as defined in claim 1.
